# EUROPEAN PATENT SPECIFICATION

(11) **EP 3 508 970 B1**
(45) Date of publication and mention of the grant of the patent: **12.07.2023**
(21) Application number: 18150390.5
(22) Date of filing: 05.01.2018
(51) Int. Cl.: G06F 3/12, G06F 3/0481

(54) **A DYNAMIC USER INTERFACE SYSTEM AND A METHOD THEREFOR**
DYNAMISCHES BENUTZERSCHNITTSTELLENSYSTEM UND VERFAHREN DAFÜR
SYSTÈME D'INTERFACE D'UTILISATEUR DYNAMIQUE ET PROCÉDÉ ASSOCIÉ

(43) Date of publication of application: 10.07.2019
(73) Proprietor: Canon Production Printing Holding B.V., 5914 HH Venlo (NL)
(72) Inventor: Krikke, Nanne, 5914 CA Venlo (NL); Van Dun, Josephus A.M., 5914 CA Venlo (NL)
(74) Representative: Canon Production Printing IP Department

(56) References cited:
- US-A1- 2016 253 078
- US-A1- 2017 329 500

## Description

### FIELD OF THE INVENTION

The present invention relates to a user interface system for displaying on a window digital dynamic status information tiles, each digital dynamic status information tile comprising information of a live status of a functional object connected to the user interface system and at least one user notification of the functional object, having a navigation option to a digital user representation of the functional object, and being configured to be pinned to a digital task bar on the window.

### BACKGROUND OF THE INVENTION

User interface systems are known that offer a large set of functionality. Such a set of functionality may be grouped in task modules for functional objects connected to the user interface system, for example applications (apps) having an application access with live information, like the LIVETILES of Microsoft's Windows 10.

Patent application US2016253078 A1 describes a network device which associates each tile object of a plurality of tile objects with a tile set. Each tile object includes one or more parameters of a communication network, and each tile set is linked to one or more context objects for a dashboard interface.

For convenience reasons the term "digital dynamic status information tile" may be abbreviated to the term "information tile", and even to the term "tile".

It is an object of the invention to provide a user interface system for displaying applications in a more dynamic way.

### SUMMARY OF THE INVENTION

According to the present invention, this object is achieved by the user interface system according to claim 1

The dynamic status information tile comprises live, and up-to-date summary, status information and notifications with respect to the coupled functional object.

Through the dynamic status information tile access is offered to the full functional object, i.e. for example access to a software item, document or application by means of clicking or touching the tile.

The dynamic status information tile may be pinned to the task bar in the window of the user interface system.

The tile order on the window is dynamically determined by a priority of status and/or a priority of notifications. Tiles that require immediate action will shift to the front of the task bar.

According to an embodiment a task for an operator of the functional object is coupled to the information of the live status and/or the at least one user notification. The user notification may be directed to the urgency of the task for the operator. The task of the operator may be determined by the live status of the functional object.

According to the present invention, the priority criterion comprises a relative position of the operator to the printing system and the relative position of the operator is taking into account with respect to the sequence order of the dynamic status information tiles. For example, tiles that represent a task that cannot be resolved remotely will not influence a tile order on the window when the user interface system is installed on a remote device. Only at the window of the user interface system being close to the printing system functional object, such tasks will be prioritized with a high priority.

According to an embodiment a colour of a dynamic status information tile on the task bar depends on the priority criterion of the respective dynamic status information tile. Tiles that require immediate action will shift to the front of the task bar and become - for example - red or orange coloured.

According to an embodiment the dynamic status information tile is configured to automatically close when a coupled task is finished, when the dynamic status information tile is unpinned from the digital task bar, and/or when there is no association of the dynamic status information tile with unsaved work in progress. Implemented in this way, the tile may be temporarily visible on the window. When a user of the user interface system navigates away from a tile, the tile may automatically close. For example, when a task is finished, for example a print job is submitted or a paper jam is resolved, the related tile may automatically close. Unsaved work in progress may be related to scheduling print jobs in a print job schedule or browsing through a media catalogue for a printing system.

According to an embodiment the sequence order of the dynamic status information tiles is adapted to tasks of a user of the user interface system. Tiles of tasks of the user of the user interface system may get priority in sequence order on the window and may be shifted to a front of the task bar.

According to an embodiment the dynamic status information tile is configured to automatically close when a task coupled to the dynamic status information tile is not considered in a primary responsibility of the user of the dynamic user interface system. Such a primary responsibility may be based on user groups and/or user specific configurations of the functional object.

On the other hand, tiles do not automatically close when a task is unfinished, when the tile is pinned to the task bar, when there is unsaved work in progress associated to the tile, or when a task is considered to be in the primary responsibility of the user of the user interface system.

A dynamic reordering of the tiles - in other words live, on-the-fly reordering - may be caused by a change in task statuses of tiles on the window, appearance of new tiles on the window or automatically closing of tiles on the window.

The invention also relates to a method according to claim 7.

The invention also relates to a non-transitory software medium comprising executable program code configured to, when executed by the user interface system according to the invention, causes said user interface system to perform the method according to the invention.

### BRIEF DESCRIPTION OF THE DRAWINGS

The user interface system and the method will be explained in greater detail with reference to the accompanying drawings wherein:
Fig. 1 is a schematic environment diagram of the user interface system connected to a functional object according to the present invention;
Fig. 2 shows an example of information tiles according to the present invention,
Fig. 3 shows a taskbar with pinned tiles on the window according to the present invention, and
Fig. 4 is a flow diagram of an embodiment of the method according to the present invention.

### DETAILED DESCRIPTION OF THE EMBODIMENTS

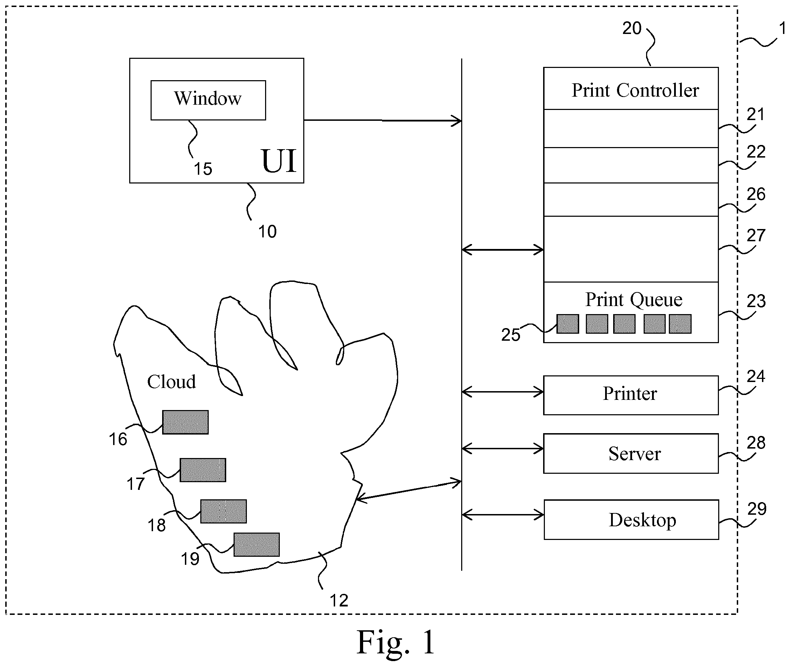

Fig. 1 is a schematic environment diagram 1 of the user interface system 10 according to the present invention. The user interface system 10 is connected to a functional object 20 via a digital network N, being wired or wireless. The functional object may be a printing system 24, a print job 25 submitted to a print controller 20 of the printing system 24, a print job planner 21 installed on the print controller 20 of the printing system 24, a maintenance planner 22 installed on the print controller 20 of the printing system 24, a status monitor 26 for supplies residing in the printing system 24, a dashboard application 16 installed in a cloud environment 12 (not part of the invention), a production overview from an output management system on a dedicated server 28, a production overview from an output management system 17 in the cloud 12 (not part of the invention), an order management system on the dedicated server 28, an order management system 18 in the cloud 12 (not part of the invention), a customer communication system on the dedicated server 28, a customer communication system 19 in the cloud 12 (not part of the invention), and a print job editing system running on a desktop 29, the print controller 20 of the printing system 24, the dedicated server 28 or a dedicated system in the cloud 12 (not part of the invention).

The user interface system 10 may be installed on a computer used by an operator or user of the functional object. The computer may be a print controller, a server, a desktop computer, a laptop computer, a tablet computer, a mobile device like a mobile phone, a wrist watch, a server computer, a mini-computer, a smart TV screen, a set-top box, etc. The user interface system 10 is configured to display information on a user interface window 15. The user interface window may be displayed on an LCD screen, a touch screen, a pixel screen, a projector, etc.

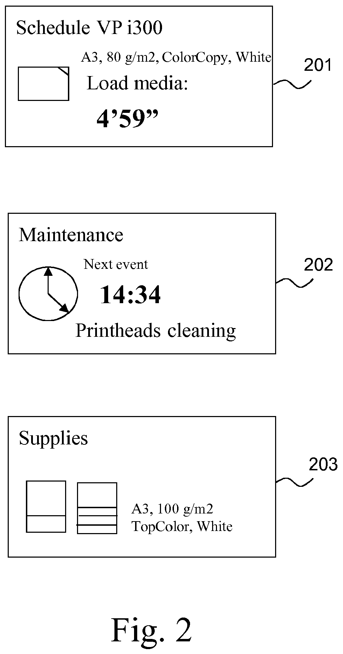

Fig. 2 shows an example of information tiles 201 - 203 according to the present invention.

A first information tile 201 concerns a warning to load a kind of media type in a printing system within a certain time frame according to the print scheduler of the printing system. The background colour of the first information tile 201 may be orange to indicate that the warning needs attention.

A second information tile 202 concerns a selected maintenance action which has to be carried out within a certain time frame. The user may have selected the maintenance action to be in the window of the user interface system as a reminder. The background colour of the second information tile 202 may be neutral, for example white.

A third information tile 203 concerns normal information like a status of the media supply holders of the printing system together with a specification of the media type being present in the supply holders. When no urgent action needs to be coupled to this status the background colour of the information tile 203 may be a discrete colour, for example a colour which is equal to the background colour of the window of the user interface system.

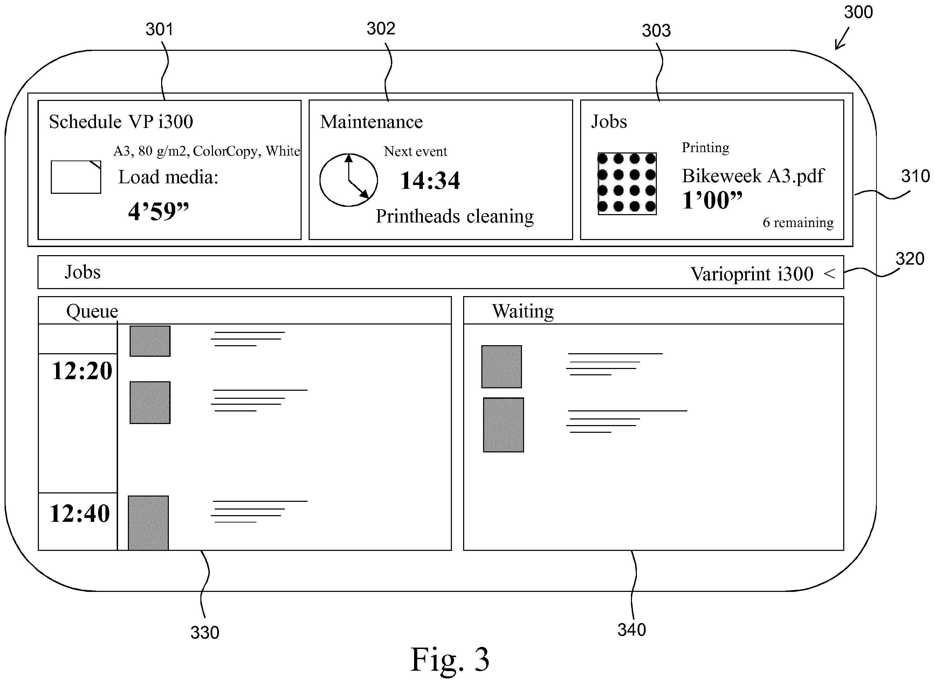

Fig. 3 shows a taskbar with pinned information tiles 301 - 303 on a taskbar 310 in a user interface window 300 according to the present invention.

Three information tiles are shown, but another number of information tiles may be envisioned on the task bar 310.

A task associated with the most left information tile 301 has a most urgent deadline (4'59"). A task associated with the middle information tile 302 has a less urgent deadline (14:34). A functional object - a print job of a pdf file - associated with the right most information tile 303 is a status of the printing system, namely the current job being printed on the printing system. From a left side of the task bar to a right side of the taskbar a priority or urgency of a required user action is decreasing.

The information in the information tiles is changing if there is a trigger to change. Moreover, the sequence order of the information tiles may change if at least one of the priorities of the related functional objects or task related to the functional objects is changed.

The sequence order is also changed if a functional object has been completed or otherwise has become irrelevant for showing at the task bar.

For example, an information tile may automatically close when a coupled task is finished, when the information tile is unpinned from the digital task bar, and/or when there is no association of the information tile with unsaved work in progress.

Implemented in this way, the tile may be temporarily visible on the window. When a user of the user interface system navigates away from a tile by clicking on another tile or opening a new workspace in the window, the tile may automatically close. For example, when a task is finished, for example a print job is submitted or a paper jam is resolved, the related tile may automatically close.

In another example the information tile will automatically close when a task coupled to the information tile is not considered in a primary responsibility of the user of the user interface system. Such a primary responsibility may be based on user groups and/or user specific configurations of the functional object.

On the other hand, information tiles do not automatically close when a task is unfinished, when the tile is pinned to the task bar, when there is unsaved work in progress associated to the tile, or when a task is considered to be in the primary responsibility of the user of the user interface system. Unsaved work in progress may be related to scheduling print jobs in a print job schedule or browsing through a media catalogue for a printing system.

When touching or clicking on a tile the user interface system navigates to a digital user representation of the underlying functional object, for example to another user window with relevant information with respect to the functional object.

In a lower part 320 of the window 300 a printing system may be selected. Beneath the selection entry in the lower part 320 jobs in the queue 330 of the selected printing system "Varioprint i300" are shown and jobs in a waiting room 340 are shown waiting to be placed into the queue 330 for the selected printing system "Varioprint i300".

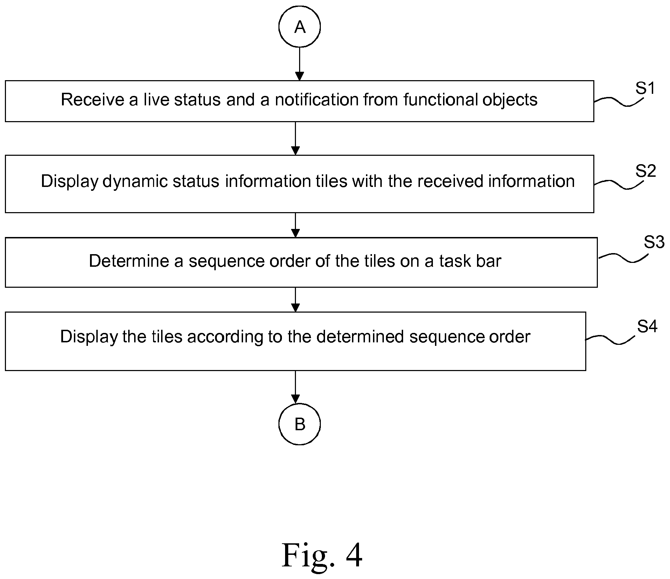

Fig. 4 is a flow diagram of the method according to the present invention.

The method starts in a starting point A. The method is used for the user interface system according to the invention.

In a first step S1 information of a live status and at least one user notification is received from a plurality of functional objects connected to the user interface system.

In a second step S2 the user interface system displays digital dynamic status information tiles. Each digital dynamic status information tile comprises information of a live status and at least one user notification of a functional object of the plurality of functional objects. Each tile has a navigation option to a digital user representation of the functional object. Each tile may be pinned to a digital task bar on the user interface system.

In a third step S3 the user interface system dynamically determines a sequence order of the dynamic status information tiles on the digital task bar depending on a priority criterion for the live status and/or the at least one notification of the dynamic status information tiles. As a sub-step the priority criteria are retrieved from the functional objects itself or from a processing system at which the functional objects reside. In another implementation the user interface system is configured to store the priority criteria beforehand in memory of the user interface and use the stored priority criteria when displaying the tiles on the window of the user interface system.

In a fourth step S4 the user interface system displays the dynamic status information tiles on a window of the user interface system according to the sequence order determined in the third step S3.

The steps S1-S4 are repeated each time a status update or notification is received from a functional object.

The method ends in an end point B.

It may be clear to the skilled person that the various embodiments of the method may be combined in one way or another, within the scope of the appended claims, in order to establish an appropriate and applicable embodiment of the method according to the invention.

## Claims

1. A user interface system (10) for a printing system (20, 24, 28, 29) for displaying on a window (15) digital dynamic status information tiles (201-203, 301-303), each digital dynamic status information tile comprising information of a live status of a functional object (20, 21, 22, 24, 25, 26, 28) related to the printing system and at least one user notification of the functional object, having a navigation option to a digital user representation of the functional object, and being configured to be pinned to a digital task bar (310) on the window,
wherein the sequence order of the dynamic status information tiles on the digital task bar dynamically depends on a priority criterion for the live status and/or the at least one notification of the dynamic status information tiles,
wherein the priority criterion comprises a relative position of an operator to the printing system and the relative position of the operator is taking into account with respect to the sequence order of the dynamic status information tiles; and wherein the functional object is one out of a printing system, a print job submitted to the printing system, a print job planner installed on the controller of the printing system, a maintenance planner installed on the controller of the printing system, a status monitor for supplies residing in the printing system, a production overview from an output management system on a dedicated server of the printing system, an order management system on a dedicated server, a customer communication system on a dedicated server, and a print job editing system running on a desktop of the printing system or on the controller of the printing system.

2. A user interface system according to claim 1, wherein a task for an operator of the functional object is coupled to the information of the live status and/or the at least one user notification.

3. A user interface system according to any of the preceding claims, wherein a colour of a dynamic status information tile on the task bar depends on the priority criterion of the respective dynamic status information tile.

4. A user interface system according to claim 2, wherein the dynamic status information tile is configured to automatically close when a coupled task is finished, when the dynamic status information tile is unpinned from the digital task bar, and/or when there is no association of the dynamic status information tile with unsaved work in progress.

5. A user interface system according to any of the preceding claims, wherein the sequence order of the dynamic status information tiles is adapted to tasks of a user of the user interface system.

6. A user interface system according to claim 5, wherein the dynamic status information tile is configured to automatically close when a task coupled to the dynamic status information tile is not considered in a primary responsibility of the user of the dynamic user interface system.

7. A method for a user interface system for a printing system, the method comprising the steps of
receiving (S1) information of a live status and at least one user notification from a plurality of functional objects related to the printing system,
the user interface system displaying (S2) digital dynamic status information tiles, each digital dynamic status information tile comprising information of a live status and at least one user notification of a functional object of the plurality of functional objects, having a navigation option to a digital user representation of the functional object, and being configured to be pinned to a digital task bar on the user interface system, and
dynamically determining (S3) a sequence order of the dynamic status information tiles on the digital task bar depending on a priority criterion for the live status and/or the at least one notification of the dynamic status information tiles,
wherein the priority criterion comprises a relative position of the operator to the printing system and the relative position of the operator is taking into account with respect to the sequence order of the dynamic status information tiles; and wherein the functional object is one out of a printing system, a print job submitted to the printing system, a print job planner installed on the controller of the printing system, a maintenance planner installed on the controller of the printing system, a status monitor for supplies residing in the printing system, a production overview from an output management system on a dedicated server of the printing system, an order management system on a dedicated server, a customer communication system on a dedicated server, and a print job editing system running on a desktop of the printing system or on the controller of the printing system.

8. A non-transitory software medium comprising executable program code configured to, when executed by the user interface system of claim 1, causes said user interface system to perform the method according to claim 7.

## Patentansprüche

1. Ein Benutzerschnittstellensystem (10) für ein Drucksystem (20, 24, 28, 29) zur Anzeige von digitalen dynamischen Statusinformationskacheln (201-203, 301-303) in einem Fenster (15), wobei jede digitale dynamische Statusinformationskachel Information über einen Lebendstatus eines sich auf das Drucksystem beziehenden funktionellen Objekts (20, 21, 22, 24, 25, 26, 28) und wenigstens eine Benutzermitteilung des funktionellen Objekts enthält und eine Navigationsoption für eine digitale Benutzerrepräsentation des funktionellen Objekts aufweist und dazu konfiguriert ist, an eine digitale Aufgabenleiste (310) in dem Fenster angeheftet zu werden, wobei die Reihenfolge der Anordnung der dynamischen Statusinformationskacheln auf der digitalen Aufgabenleiste dynamisch von einem Prioritätskriterium für den Lebendstatus und/oder der wenigstens einen Mitteilung der dynamischen Statusinformationskacheln abhängig ist, wobei das Prioritätskriterium eine relative Position eines Bedieners des Drucksystems einschließt und die relative Position des Bedieners in Bezug auf die Reihenfolge der Anordnung der dynamischen Statusinformationskacheln in Betracht gezogen wird; und wobei das funktionelle Objekt eines der folgenden Objekte ist: ein Drucksystem, ein an das Drucksystem übermittelter Druckauftrag, eine Druckauftrag-Planungsinstanz, die auf der Steuereinrichtung des Drucksystems installiert ist, eine Wartungs-Planungsinstanz, die auf der Steuereinrichtung des Drucksystems installiert ist, ein Statusmonitor für in dem Drucksystem vorhandenes Verbrauchsmaterial, eine Produktionsübersicht von einem Ausgabemanagementsystem auf einem spezifischen Server des Drucksystems, ein Auftragsmanagementsystem auf einem spezifischen Server, ein Kundenkommunikationssystem auf einem spezifischen Server, und ein Druckauftrag-Ediersystem, das auf einem Schreibtisch des Drucksystems oder auf der Steuereinrichtung des Drucksystems läuft.

2. Ein Benutzerschnittstellensystem nach Anspruch 1, bei dem eine Aufgabe für einen Bediener des funktionellen Objekts an die Information über den Lebendstatus und/oder die wenigstens eine Benutzermitteilung gekoppelt ist.

3. Ein Benutzerschnittstellensystem nach einem der vorstehenden Ansprüche, bei dem eine Farbe einer dynamischen Statusinformationskachel auf der Aufgabenleiste von dem Prioritätskriterium der betreffenden dynamischen Statusinformationskachel abhängig ist.

4. Ein Benutzerschnittstellensystem nach Anspruch 2, bei dem die dynamische Statusinformationskachel dazu konfiguriert ist, automatisch zu schließen, wenn eine gekoppelte Aufgabe erledigt ist, wenn die dynamische Statusinformationskachel von der digitalen Aufgabenleiste gelöst wird und/oder wenn es keine Zuordnung der dynamischen Statusinformationskachel zu nicht gesicherten, in Bearbeitung befindlichen Aufgaben gibt.

5. Ein Benutzerschnittstellensystem nach einem der vorstehenden Ansprüche, bei dem die Reihenfolge der Anordnung der dynamischen Statusinformationskacheln an Aufgaben eines Benutzers des Benutzerschnittstellensystems angepasst ist.

6. Ein Benutzerschnittstellensystem nach Anspruch 5, bei dem die dynamische Statusinformationskachel dazu konfiguriert ist, automatisch zu schließen, wenn eine an die dynamische Statusinformationskachel gekoppelte Aufgabe nicht als in einem primären Verantwortungsbereich des Benutzers des dynamischen Schnittstellensystems liegend angesehen wird.

7. Verfahren für ein Benutzerschnittstellensystem für ein Drucksystem, welches Verfahren die folgenden Schritte aufweist:
empfangen (S1) von Information über einen Lebendstatus und wenigstens eine Benutzermitteilung von einer Vielzahl von sich auf das Drucksystem beziehenden funktionellen Objekten,
das Benutzerschnittstellensystem zeigt digitale dynamische Statusinformationskacheln an (S2),
jede digitale dynamische Statusinformationskachel enthält Information über einen Lebendstatus und wenigstens eine Benutzermitteilung eines funktionellen Objekts aus der Vielzahl der funktionellen Objekte, mit einer Navigationsoption für eine digitale Benutzerrepräsentation des funktionellen Objekts und dazu konfiguriert, an eine digitale Aufgabenleiste auf dem Benutzerschnittstellensystem angeheftet zu werden, und
dynamisches Bestimmen (S3) einer Reihenfolge der Anordnung der dynamischen Statusinformationskacheln auf der digitalen Aufgabenleiste in Abhängigkeit von einem Prioritätskriterium für den Lebendstatus und/oder die wenigstens eine Mitteilung der dynamischen Statusinformationskacheln,
wobei das Prioritätskriterium eine relative Position des Bedieners des Drucksystems einschließt und die relative Position des Bedieners in Bezug auf die Reihenfolge der Anordnung der dynamischen Statusinformationskacheln in Betracht gezogen wird; und
wobei das funktionelle Objekt eines der folgenden Objekte ist: ein Drucksystem, ein an das Drucksystem übermittelter Druckauftrag, eine Druckauftrag-Planungsinstanz, die auf der Steuereinrichtung des Drucksystems installiert ist, eine Wartungs-Planungsinstanz, die auf der Steuereinrichtung des Drucksystems installiert ist, ein Statusmonitor für in dem Drucksystem vorhandenes Verbrauchsmaterial, eine Produktionsübersicht von einem Ausgabemanagementsystem auf einem spezifischen Server des Drucksystems, ein Auftragsmanagementsystem auf einem spezifischen Server, ein Kundenkommunikationssystem auf einem spezifischen Server, und ein Druckauftrag-Ediersystem, das auf einem Schreibtisch des Drucksystems oder auf der Steuereinrichtung des Drucksystems läuft.

8. Ein nichtflüchtiges Softwaremedium mit ausführbarem Programmcode, der dazu konfiguriert ist, wenn er auf einem Benutzerschnittstellensystem nach Anspruch 1 ausgeführt wird, dieses Benutzerschnittstellensystem zu veranlassen, das Verfahren nach Anspruch 7 auszuführen.

## Revendications

1. Système d'interface utilisateur (10) pour un système d'impression (20, 24, 28, 29) pour afficher dans une fenêtre (15) des vignettes d'informations d'état dynamiques numériques (201-203, 301-303), chaque vignette d'informations d'état dynamique numérique comprenant des informations d'un état en direct d'un objet fonctionnel (20, 21, 22, 24, 25, 26, 28) relatif au système d'impression et au moins une notification d'utilisateur de l'objet fonctionnel, présentant une option de navigation vers une représentation d'utilisateur numérique de l'objet fonctionnel, et étant configurée pour être épinglée à une barre de tâches numérique (310) dans la fenêtre,
dans lequel l'ordre de séquence des vignettes d'informations d'état dynamiques sur la barre de tâches numérique dépend dynamiquement d'un critère de priorité pour l'état en direct et/ou la au moins une notification des vignettes d'informations d'état dynamiques,
dans lequel le critère de priorité comprend une position relative d'un opérateur par rapport au système d'impression et la position relative de l'opérateur prend en compte par rapport à l'ordre de séquence des vignettes d'informations d'état dynamiques ; et
dans lequel l'objet fonctionnel est un parmi un système d'impression, un travail d'impression soumis au système d'impression, un planificateur de travail d'impression installé sur le dispositif de commande du système d'impression, un planificateur de maintenance installé sur le dispositif de commande du système d'impression, un moniteur d'état de consommables résidant dans le système d'impression, une vue d'ensemble de la production à partir d'un système de gestion de sortie sur un serveur dédié du système d'impression, un système de gestion des commandes sur un serveur dédié, un système de communication client sur un serveur dédié et un système d'édition de travail d'impression fonctionnant sur un bureau du système d'impression ou sur le dispositif de commande du système d'impression.

2. Système d'interface utilisateur selon la revendication 1, dans lequel une tâche pour un opérateur de l'objet fonctionnel est couplée aux informations de l'état en direct et/ou à la au moins une notification d'utilisateur.

3. Système d'interface utilisateur selon l'une quelconque des revendications précédentes, dans lequel une couleur d'une vignette d'informations d'état dynamique sur la barre de tâches dépend du critère de priorité de la vignette d'informations d'état dynamique respective.

4. Système d'interface utilisateur selon la revendication 2, dans lequel la vignette d'informations d'état dynamique est configurée pour se fermer automatiquement lorsqu'une tâche couplée est terminée, lorsque la vignette d'informations d'état dynamique est détachée de la barre de tâches numérique, et/ou lorsqu'il n'y a aucune association de la vignette d'informations d'état dynamique avec un travail en cours non enregistré.

5. Système d'interface utilisateur selon l'une quelconque des revendications précédentes, dans lequel l'ordre de séquence des vignettes d'informations d'état dynamiques est adapté aux tâches d'un utilisateur du système d'interface utilisateur.

6. Système d'interface utilisateur selon la revendication 5, dans lequel la vignette d'informations d'état dynamique est configurée pour se fermer automatiquement lorsqu'une tâche couplée à la vignette d'informations d'état dynamique n'est pas considérée comme une responsabilité principale de l'utilisateur du système d'interface utilisateur dynamique.

7. Procédé pour un système d'interface utilisateur pour un système d'impression, le procédé comprenant les étapes consistant à
recevoir (S1) des informations d'état en direct et au moins une notification d'utilisateur à partir d'une pluralité d'objets fonctionnels relatifs au système d'impression,
le système d'interface utilisateur affichant (S2) des vignettes d'informations d'état dynamiques numériques, chaque vignette d'informations d'état dynamique numérique comprenant des informations d'un état en direct et au moins une notification d'utilisateur d'un objet fonctionnel de la pluralité d'objets fonctionnels, présentant une option de navigation vers une représentation d'utilisateur de l'objet fonctionnel, et étant configurée pour être épinglée à une barre de tâches numérique sur le système d'interface utilisateur, et
déterminer (S3) de manière dynamique un ordre de séquence des vignettes d'informations d'état dynamiques sur la barre de tâches numérique en fonction d'un critère de priorité pour l'état en direct et/ou la au moins une notification des vignettes d'informations d'état dynamiques,
dans lequel le critère de priorité comprend une position relative de l'opérateur par rapport au système d'impression et la position relative de l'opérateur est prise en compte par rapport à l'ordre de séquence des vignettes d'informations d'état dynamiques ; et
dans lequel l'objet fonctionnel est un parmi un système d'impression, un travail d'impression soumis au système d'impression, un planificateur de travail d'impression installé sur le dispositif de commande du système d'impression, un planificateur de maintenance installé sur le dispositif de commande du système d'impression, un moniteur d'état de consommables résidant dans le système d'impression, une vue d'ensemble de la production à partir d'un système de gestion de sortie sur un serveur dédié du système d'impression, un système de gestion des commandes sur un serveur dédié, un système de communication client sur un serveur dédié et un système d'édition de travail d'impression fonctionnant sur un bureau du système d'impression ou sur le dispositif de commande du système d'impression.

8. Support logiciel non transitoire comprenant un code de programme exécutable configuré pour, lorsqu'il est exécuté par le système d'interface utilisateur de la revendication 1, amener ledit système d'interface utilisateur à exécuter le procédé selon la revendication 7.
